# FASCICULE DE BREVET EUROPEEN

(11) **EP 0 521 741 B1**
(45) Date de publication et mention de la délivrance du brevet: **16.07.1997**
(21) Numéro de dépôt: 92401426.9
(22) Date de dépôt: 26.05.1992
(51) Int. Cl.: C03B 23/023, C03B 23/03, C03B 27/044, C03B 35/20, C03B 40/00

(54) **Revêtement pour moules annulaires de bombage/trempe**
Bekleidung für ringförmige Biege-/Härtformen
Liner for annular bending/temporing moulds

(30) Priorité: 30.05.1991 FR 9106494
(43) Date de publication de la demande: 07.01.1993
(73) Titulaire: SAINT-GOBAIN VITRAGE, 92400 Courbevoie (FR)
(72) Inventeur: Lesage, Jean-Luc, F-60280 Margny Les Compiègne (FR); Franco, Thierry, F-60200 Compiègne (FR)
(74) Mandataire: Muller, René

(56) Documents cités:
- EP-A- 0 186 529
- EP-A- 0 312 439
- EP-A- 0 373 992
- FR-A- 1 065 690
- US-A- 3 741 743

## Description

L'invention a trait aux techniques de bombage/trempe de feuilles de verre, et concerne plus particulièrement le revêtement des formes annulaires intervenant dans lesdites techniques.

Les techniques de bombage/trempe dites horizontales font généralement intervenir une première phase de bombage, où la feuille de verre préalablement chauffée dans un four au-delà de sa température de ramollissement est appliquée par exemple par des moyens pneumatiques au moins une fois contre un élément supérieur constitué par une plaque en tôle ou céramique réfractaire. Dans certains cas, cet élément ne constitue qu'un moyen porteur. Dans d'autres cas, il constitue un moyen de formage ou pré-formage de la feuille de verre, il peut alors présenter un galbe plus ou moins proche de celui que l'on souhaite conférer à la feuille de verre.

Mais quelques soient sa forme et sa fonction, on le désignera par la suite par le terme d'élément supérieur plein.

Ainsi, la feuille peut être aspirée comme cela est décrit dans la demande de brevet EP-A-3 391 et/ou soulevée par un courant gazeux ascendant chaud contre cette forme de bombage comme cela est décrit dans la demande de brevet FR-A-2 567 508. Elle peut également être soulevée par des moyens mécaniques tels que des ergots ou une forme inférieure pouvant avoir différentes configurations, comme cela est décrit dans le brevet FR-B-2 009 278.

Puis la feuille de verre ainsi plus ou moins préformée peut être ensuite déposée de manière bien connue également sur une forme à profil courbe ouverte en son centre, appelée plus succintement moule annulaire, avant d'être évacuée sur ledit moule annulaire vers la zone de trempe thermique. Cette trempe consiste à envoyer, à partir de deux caissons disposés au-dessous et au-dessus de la feuille de verre, des jets de gaz de refroidissement approximativement perpendiculairement aux deux faces de ladite feuille.

Ce type de moule annulaire est communément équipé d'un revêtement spécifiquement adapté à ce type de trempe et aux contraintes qu'il impose. En effet, ce revêtement doit, outre supporter des températures comprises entre 650 et 800°C et ne pas marquer le verre, être particulièrement perméable à l'air, de manière à ne pas gêner la circulation de l'air de refroidissement sous pression venant de part et d'autre de la feuille de verre. En effet, l'air projeté du caisson de trempe inférieur par rapport au moule annulaire supportant la feuille doit pouvoir s'écouler également tangentiellement le long de la surface de contact entre le moule et la feuille, de manière à ce que le pourtour de la feuille soit également correctement trempé, ce qui implique un revêtement de moule assez perméable pour permettre cet écoulement.

Divers revêtements prévus pour ces cadres de trempe sont connus de l'art.

Usuellement, on propose un treillis à filet de fibres réfractaires à mailles relativement larges, de l'ordre d'au moins un millimètre de côté, éventuellement, comme le préconise le brevet US-A-4 906 271, en fixant les mailles par des noeuds aux points de croisement, de manière à bien homogénéiser la répartition de ces points de croisement, qui constituent l'essentiel des points de contact entre revêtement de moule et feuille.

D'autres types de procédé font intervenir, pour compléter ou remplacer le bombage par application contre une forme pleine puis descente sur un moule de trempe, un véritable pressage de la feuille prise entre la forme pleine au dessus d'elle et un moule annulaire de bombage en dessous d'elle. Dans la mesure où le pressage implique des forces mécaniques considérables et assez brutales imposées à la feuille de verre au niveau de son pourtour soutenu par le moule annulaire, le revêtement dudit moule annulaire se doit de posséder des caractéristiques bien spécifiques et différentes de celles requises pour le revêtement d'un moule de trempe.

En effet, il doit présenter un certain moelleux, de manière à adoucir au maximum le contact avec la feuille de verre et à gommer les éventuelles légères imperfections de forme du moule. Il doit être de plus relativement déformable et extensible, afin que l'on puisse aisément le fixer en le tendant sur le moule par exemple par des pinces ou crochets. Il doit être capable d'absorber les poussières qui pourraient se trouver à l'interface moule/feuille en faisant ainsi preuve d'une certaine porosité, afin que ces poussières ne marquent pas la surface du verre ramolli.

Il doit aussi, bien sûr, ne pas marquer lui-même le verre par sa propre texture superficielle. Il doit donc être d'une texture assez dense et serrée, texture que présentent notamment les tricots métalliques à mailles serrées indiqués dans la demande de brevet FR-A-2 644 156 et qui permet d'obtenir une surface de contact avec la feuille de verre la plus unie et lisse possible. Ainsi, pendant le glissement relatif entre la feuille de verre et le moule annulaire, on évite des risques de marques sur la feuille de verre, notamment en forme de griffes. Pendant le pressage proprement dit entre la forme pleine et le moule annulaire, on écarte également de tels risques, en garantissant un contact doux et sans heurt entre verre et moule annulaire.

Mais ce type de revêtement, du fait justement de cette texture dense, est alors incompatible avec une utilisation comme revêtement pour moule de trempe car, comme on l'a vu précédemment, il ne permettrait pas une trempe efficace du pourtour de la feuille de verre en s'opposant à l'écoulement tangentiel de l'air de refroidissement.

Dans ce cas, il est alors nécessaire d'utiliser pour la trempe et pour le pressage deux moules annulaires ayant des revêtements de natures différentes.

Mais ceci implique une étape supplémentaire d'échange de moules, avec tous les problèmes de synchronisation et d'augmentation de temps de cycle que cela pose.

Les auteurs de la présente invention ont cherché à mettre au point un moule annulaire dont la surface de contact avec la feuille de verre soit susceptible de convenir à la fois pour le bombage, notamment par pressage, et pour la trempe thermique à l'air.

On pourrait envisager d'effectuer l'opération de pressage de la feuille de verre avec le cadre conçu et revêtu pour l'opération de trempe thermique, mais cela reste un compromis, qui n'est tolérable au point de vue de la qualité optique des vitrages obtenus que si le glissement relatif verre/moule annulaire générateur de marques est très limité, c'est-à-dire en fait si le bombage à conférer à la feuille de verre est tout à fait modeste.

Un type de moule annulaire "bifonctionnel" susceptible de convenir pour des bombages relativement prononcés sans marquage des feuilles est évoqué dans le brevet EP-A-373 992. En l'occurence, il s'agit d'un moule annulaire comportant une partie fixe par rapport au cadre de soutien du moule et une aile articulée par rapport à cette partie fixe, qui, en se repliant lors du pressage contre la forme pleine supérieure, permet d'obtenir des feuilles de verre localement fortement bombées. La partie fixe est recouverte d'un filet à mailles assez larges permettant la trempe, alors que l'aile articulée est recouverte d'un feutre dense adapté au pressage. Lors de la trempe, le même moule annulaire est utilisé, mais l'aile est alors en position dépliée, de manière à ne pas gêner la trempe au niveau du bord fortement bombé de la feuille. Cela signifie donc que cette zone marginale est laissée sans soutien lors de la trempe. cette situation est susceptible d'engendrer des déformations parasites ultérieures au pressage, et il est nécessaire d'en tenir compte, par exemple au niveau de la courbure du moule annulaire et/ou de l'amplitude dudit pressage par l'aile articulée, afin d'obtenir le produit final ayant la courbure recherchée.

De par sa conception même, ce moule n'est utilisable que si la zone fortement bombée souhaitée est peu étendue et limitée à un seul côté de la feuille de verre. En effet, il faut bien que la feuille de verre lors de la trempe soit soutenue par une partie fixe suffisamment importante pour éviter son affaissement, ladite partie fixe étant par ailleurs peu courbée et revêtus d'un tissu de trempe, le pressage se faisant essentiellement par l'aile articulée. Ce moule ne convient donc pas aux vitrages de forme complexe, présentant par exemple des courbures selon des directions différentes près de deux de leurs bords opposés ou adjacents.

Il est par ailleurs connu du brevet US-A-3 741 743 un revêtement pour moule annulaire pour bombage et trempe, et comportant deux types de tissus superposés, le premier de texture épaisse venant renforcer le second de texture plus fine qui le recouvre et qui est en contact avec la périphérie des feuilles de verre.

En examinant de manière fine comment s'opère le bombage d'une feuille de verre par pressage, les auteurs de l'invention ont pu constater les phénomènes suivants, liés au mouvement relatif entre la feuille de verre et le moule annulaire lors de l'opération de pressage.

Avant le début du pressage, la feuille de verre est plane, ou éventuellement déjà en partie bombée lors d'un préformage antérieur par application de la feuille contre la forme supérieure pleine galbée. Mais dans un cas comme dans l'autre, elle est moins courbée que ne l'est le bord du moule annulaire inférieur vu radialement, ledit bord épousant parfaitement la courbure de la forme supérieure pleine. Le contour de la feuille déborde donc du moule annulaire. Le premier contact entre la feuille et le moule annulaire se fait ainsi entre le pourtour extérieur du moule et une partie de la feuille de verre très localisée, qui ne correspond pas au pourtour le plus extérieur de celle-ci.

La feuille est ensuite progressivement pressée par rapprochement relatif entre le moule annulaire inférieur et la forme supérieure. La feuille de verre se creuse donc de plus en plus. La surface de la feuille de verre en contact avec le moule annulaire d'une part s'élargit progressivement, d'autre part se déplace vers le pourtour le plus extérieur de la feuille. La surface de contact du moule annulaire avec la feuille, quant à elle, s'élargit symétriquement et se déplace vers le pourtour le plus intérieur du moule. Globalement, il s'effectue ainsi un glissement relatif radial du pourtour de la feuille par rapport à la largeur du bord du moule annulaire.

A la fin du pressage, la feuille épouse complètement la courbure radiale du bord du moule annulaire. Elle est alors en contact d'une part par toute sa face supérieure avec la forme pleine, et d'autre part par le pourtour extérieur de sa face inférieure avec cette fois le pourtour intérieur du moule annulaire.

Les auteurs de l'invention ont alors mis à profit ces observations, afin d'être en mesure de proposer un moule annulaire qui puisse convenir à la fois au pressage et à la trempe à l'air de feuilles de verre.

Ils ont en effet réalisé que c'est lors du glissement relatif qui s'opère pendant le pressage qu'existe un grand risque de marquage de la feuille de verre, essentiellement alors que la feuille de verre est en contact avec le pourtour extérieur du moule annulaire, et ceci est d'autant plus vrai au tout début du contact verre/moule, où la portion de la feuille de verre qui entre en contact avec le moule est de surface très réduite et doit supporter alors de fortes pressions mécaniques localisées.

Les auteurs ont alors proposé d'utiliser le pourtour intérieur du moule annulaire comme surface de support de la feuille de verre pendant la trempe, en adaptant alors seulement le pourtour extérieur de celui-ci à l'opération de pressage, ou plus exactement à l'opération de glissement relatif précédemment explicité qui prélude au pressage final, ou à toute autre opération de bombage, notamment par simple inertie, qui induit ce type de déplacement relatif verre/moule annulaire.

Dans l'exposé de l'invention suivant, on utilisera pour plus de commodité également le terme de 〈〈 pressage 〉〉 pour désigner cette première phase de glissement relatif du moule annulaire par rapport au verre.

L'invention consiste donc en un dispositif de bombage/trempe de feuilles de verre portées à leur température de ramollissement en vue de leur bombage et de leur trempe, comportant des moyens de bombage supérieurs, notamment un élément plein supérieur, et un moule annulaire inférieur sur lequel les feuilles de verre se déforment et par rapport auquel le bord desdites feuilles se déplace du fait de la déformation, notamment par pressage horizontal entre les moyens de bombage supérieurs et le moule inférieur. Ce moule annulaire est conçu de manière à ce que la surface de contact de son revêtement avec les feuilles de verre au début de leur déformation sur le moule, se situant sur le pourtour extérieur dudit moule, soit adaptée au déplacement sans marque du verre sur ledit moule, et de manière à ce que, par contre, ladite surface de contact à la fin du déplacement, notamment à la fin du pressage, se situant sur le pourtour intérieur dudit moule soit adaptée à la trempe.

L'invention a également pour objet le revêtement lui-même de ce moule annulaire, avec une surface de contact avec les feuilles de verre adaptée comme précédemment mentionnée, c'est-à-dire présentant deux surfaces juxtaposées, l'une destinée à être située sur le pourtour extérieur du moule et autorisant le glissement sans marque des bords des feuilles de verre sur elle, suite à la déformation des feuilles de verre notamment par pressage, l'autre destinée à être située sur le pourtour intérieur dudit moule et autorisant la trempe thermique à l'air des feuilles de verre bombées sur le moule avec intercalation du revêtement.

De cette manière, on élimine avantageusement la majeure partie des risques de marquage, puisque les feuilles rencontrent une surface de contact appropriée, c'est-à-dire bien lisse et unie, lorsqu'elles subissent l'amorce de bombage par glissement. De plus, on obtient tout de même un niveau de trempe satisfaisant à la périphérie de la feuille, puisqu'en fin de déplacement du verre par rapport au moule, notamment par pressage, jusqu'à la fin de l'opération de trempe, elle se retrouve en contact avec une surface qui y est appropriée, suffisamment perméable à l'air. On n'a donc plus besoin que d'un seul moule annulaire, notamment un moule utilisé habituellement pour la trempe, car celui-ci présente usuellement une largeur de bord significative dont on peut aisément distinguer les deux surfaces de contact précitées.

Ceci permet des gains évidents de cadence, et donc de coût, pour des produits finals de qualité. Cela permet notamment, en utilisant un tel moule annulaire, de diminuer les temps de réglage. En effet, toute utilisation d'un moule annulaire nécessite des réglages manuels fastidieux, tout d'abord pour assurer la concentricité de la surface de contact avec le verre dudit moule par rapport à la forme pleine, et en outre pour assurer le positionnement de cette surface de contact dans le plan horizontal, c'est ce qu'on appelle usuellement régler "l'assiette" du moule. Dans le cas de l'invention, au lieu d'utiliser deux moules annulaires, l'un pour le bombage, notamment par pressage, l'autre pour la trempe, on n'en utilise qu'un seul remplissant ces deux fonctions, ce qui a pour conséquence de diviser au moins par deux, ce qui est loin d'être négligeable, tous les temps de réglage y afférant, et de gagner en simplicité.

L'invention s'applique aussi bien à un moule annulaire comportant un rail continu, qu'à un moule annulaire ayant un rail serpenté avec par exemple au moins une partie articulée mobile par rapport au reste du rail.

Sur ce point, se dégage un avantage essentiel de l'invention : En effet, de manière connue, à partir d'un certain niveau de courbure à conférer localement à une feuille de verre, il est nécessaire d'opérer un pressage avec un moule annulaire articulé. De cette manière, par rotation autour d'un axe de l'aile articulée par rapport au reste du moule fixe, on arrive à courber la feuille de verre de façon prononcée en évitant ce mouvement de glissement radial moule/verre générateur de risques de marquage. Mais ce système d'articulation est clairement d'un fonctionnement nettement plus complexe que celui d'un moule fixe, ne serait-ce que parce qu'il y a des mouvements supplémentaires relatifs à coordonner. Or, à partir du moment où, selon l'invention, on propose un moule annulaire non articulé de manière à ce que le mouvement relatif moule/verre ne provoque plus de marques grâce à une surface de contact étudiée, alors on peut reculer beaucoup plus loin la limite du degré de courbure au-delà de laquelle il faut recourir à un moule annulaire articulé complexe.

De plus, au-delà de cette nouvelle limite, en munissant un moule annulaire articulé du revêtement selon l'invention, on peut effectuer des bombages éventuellement beaucoup plus complexes et/ou prononcés que ceux obtenus usuellement par un moule articulé, en diminuant fortement les risques de marquage tout au long dudit moule sur le verre, en particulier quand l'aile est relativement longue par rapport au reste du moule.

On précise de surcroît que s'il est particulièrement avantageux d'appliquer l'invention à un moule prévu pour une opération de pressage véritable entre un moule supérieur et un moule annulaire inférieur, on peut l'appliquer a fortiori avec le même succès pour des moules annulaires prévus notamment pour un bombage sous le simple effet de la gravité.

Dans le cas où, localement, lors du premier contact entre le moule annulaire et la feuille de verre, une partie de celle-ci dépasse nettement du moule, on peut prévoir de positionner à cet endroit sur le moule un déflecteur, prolongeant le moule vers l'extérieur selon la courbure de celui-ci. On munit alors naturellement ce déflecteur d'une surface de contact lisse permettant le glissement du verre, comme notamment la surface précédemment évoquée sous le terme de surface adaptée au pressage.

Les surfaces de contact du moule annulaire sont obtenues par juxtaposition, notamment par couture, de deux types de revêtement, l'un adapté au déplacement relatif des feuilles de verre par rapport au moule annulaire, notamment par pressage, et l'autre à la trempe, l'essentiel étant que la surface globale de contact entre feuilles et moule annulaire présente une continuité de niveau, afin d'éviter tout risque de marquage de la feuille de verre lorsqu'elle glisse de l'un à l'autre des revêtements. De même, un des deux revêtements peut recouvrir totalement ou partiellement l'autre, tant que la continuité de niveau est correctement assurée.

L'invention a aussi pour objet un matériau, destiné au revêtement pour moule annulaire servant de support aux feuilles de verre lors de leur bombage et trempe, ledit matériau présentant au moins deux zones de structures distinctes, en particulier deux structures de tissage ou tricotage différentes, juxtaposées ou se recouvrant partiellement, de manière à ce que la surface de contact avec les feuilles de verre présente une continuité de niveau, avec une zone dense ayant un aspect lisse pour un contact sans aspérité et une autre zone aérée.

De préférence, ce matériau est conçu de manière à ce que sa partie dense ait une perméabilité à l'air comprise entre 1500 et 15000 et de préférence entre environ 4000 et 10000, l'autre partie à structure aérée ayant quant à elle une perméabilité supérieure à environ 15000. La perméabilité est définie dans le cadre de l'invention par le nombre de litres d'air capables de traverser en une heure 10 cm² du matériau en question quant on les projette sur ce dernier sous une pression de 100 Pa.

Le matériau est notamment à base de fils ou fibres réfractaires métalliques, par exemple en acier inoxydable ou en alliage nickel-chrome. Il peut également comporter des fils ou fibres non métalliques, notamment en matériau céramique tel que la silice.

On peut l'obtenir avantageusement par une modification de la structure de tricotage ou de tissage, c'est-à-dire en fabriquant en une seule étape les différentes parties dudit matériau, l'une dense, l'autre aérée, en modifiant en cours de tricotage ou tissage sa texture et/ou sa densité.

On précise que, de préférence, la surface dudit revêtement autorisant le glissement relatif des feuilles de verre sur le moule annulaire sans marque, notamment par pressage, est collée sur le moule.

D'autres détails et caractéristiques avantageuses de l'invention apparaîtront au cours de la description détaillée ci-après d'exemples de réalisation non limitatifs.

Selon le mode de réalisation préféré de l'invention, le revêtement est constitué de deux bandes parallèles cousues l'une à l'autre, l'ensemble étant fixé mécaniquement, par des pinces notamment, sur le moule annulaire.

Pour donner un ordre de grandeur des largeurs relatives de ces deux bandes, on peut donner l'exemple suivant : si l'on souhaite recouvrir un moule annulaire de largeur de bord de 60 mm, on pourra joindre une bande adaptée au déplacement relatif verre/moule, notamment pour le pressage d'une largeur de 52 mm et une bande pour la trempe d'une largeur de 8 mm.

On détermine en fait ces largeurs relatives suivant le moule annulaire considéré et la manière dont repose la feuille de verre sur le moule lors de la trempe. En effet, quelle que soit la largeur radiale de la surface de contact avec le verre du moule annulaire, il faut de préférence que la surface du moule adaptée à la trempe corresponde de manière la plus proche possible à la surface de verre supportée par le moule lors de l'opération de trempe. Avantageusement, on ne la choisit pas plus large, car cela impliquerait qu'une partie du mouvement de glissement du verre sur le moule se fasse sur une surface adaptée à la trempe, ce qui entraînerait des risques de marquage accrus.

Dans la mesure où tout revêtement utilisé habituellement pour le pressage, et plus généralement adapté au déplacement relatif des feuilles de verre par rapport au moule annulaire lors du bombage, peut ainsi selon l'invention être combiné à tout revêtement utilisé habituellement pour la trempe, on donne tout d'abord, sans aucun caractère limitatif, les caractéristiques de la partie de revêtements adaptée audit déplacement relatif sans marque.

Dans tous les tableaux suivants, on précise que l'élongation est exprimée en pourcentage, et a été mesurée conformément à la norme DIN 53857 à 20°C sur un échantillon de 200 x 50 mm étiré à une vitesse de 50 mm/mn. La charge à la rupture a été mesurée suivant la même norme et dans les mêmes conditions, mais à différentes températures, son unité est en N/5cm. La perméabilité à l'air est mesurée conformément à la norme DIN ISO 4022 à 200 Pa et est exprimée en l. dm⁻².mn⁻¹. La déformabilité à la rupture est également exprimée en pourcentage.

On utilise un revêtement à base de fibres réfractaires métalliques tricotées. Ainsi, les tricots vendus sous la dénomination Bekitherm KN/C1/INC 601 et KN/C1/316L, Bekitherm KN/C2/316L et Bekitherm KN/C4/316L par la société Bekaert Fibre Technologies sont adéquates.

Leurs caractéristiques sont les suivantes :
- Bekitherm KN/C1/INC 601 : alliage à base de nickel-chrome Bekitherm KN/C1/316L : alliage en acier inoxydable, qu'il est intéressant d'utiliser dans le cas où le moule annulaire est lui-même en alliage 316 L, car cela enlève tout risque d'oxydation par un phénomène de "pile" entre le métal du moule et celui du tissu.
tous deux ont une épaisseur de tricot de 1 mm et un grammage de 700 g/m².

| | 316 L | INC 601 |
|---|---|---|
| déformabilité à la rupture | | |
| direction des rangs du tricot | 60 | 40 |
| direction des côtes du tricot | 90 | 90 |

| charge à la rupture | | |
|---|---|---|
| rangs du tricot | 300 (20°C) | 220 (20°C) |
| côtes du tricot | 240 (20°C) | 120 (20°C) |

- Bekitherm KN/C2/316L est fait en acier inoxydable. Il a une épaisseur de 0,88 mm, un grammage de 650 g/m² et une déformabilité à la rupture dans les deux directions supérieure à 50 %.
- Bekitherm KN/C4/316L est en alliage nickel-chrome. Il a une épaisseur de 1 mm, un grammage de 875 g/m² et une déformabilité analogue à celle du Bekitherm KN/C2/316L.

On utilise également avantageusement les revêtements de la même société dénommés Bekitherm NP 250-316L et Bekitherm NP 250 INC-601 à base des mêmes alliages. Il s'agit d'une structure de tissu entourée sur ses deux faces d'une couche de feutre dénommée Bekinox à base d'acier inoxydable. En INC-601 ou en 316L, ils ont un grammage similaire de 1500 g/m². Leurs caractéristiques physiques sont les suivantes :

| | 316 L | INC 601 |
|---|---|---|
| charge à la rupture | minim 1200 (20°C) | minim 1100 (20°C) |
| | minim 1020 (350°C) | minim 825 (550°C) |
| Elongation | minimum 1 | minimum 1 |
| perméabilité à l'air | max 250 | max 250 |

De même, tout revêtement adapté à la trempe peut être utilisé conjointement. Ainsi, on utilise avantageusement une texture de filet, à partir de fibres réfractaires métalliques, comme le brevet FR-2 621 906 le préconise. On choisit de préférence des fibres d'acier inox 316 L. La structure préférée du tissage consiste en des chaînettes disposées parallèlement les unes aux autres, et liées transversalement deux à deux par des fils. Lesdites chaînettes sont obtenues à partir de trois fils, et chacun des fils est obtenu par association de dizaines de fibres unitaires. Chaque maille du tissu ainsi obtenu a un côté de 2 à 8 mm, et de préférence ici inférieur à 3 mm vu la largeur de la bande que l'on prélève.

Selon un autre mode de réalisation, les deux bandes n'en font qu'une, dans la mesure où il s'agit d'un tricot dont le maillage évolue de manière à ce qu'il soit serré au niveau de la surface adaptée au pressage et plus large au niveau de la surface adaptée à la trempe. On prend soit des fibres à base d'acier inox 316 L, soit à base d'INC 601 que l'on réunit en fils afin d'être tricotés. Cela rend avantageusement superflue l'opération de couture entre les deux types de revêtement.

Ces modes de réalisation ne sont nullement limitatifs de l'invention. On peut ainsi combiner tout revêtement usuellement utilisé spécifiquement pour la trempe avec tout revêtement utilisé spécifiquement pour le bombage impliquant un déplacement relatif verre/moule, et notamment pour le bombage par pressage, dans le cadre de cette invention.

L'intérêt majeur de l'invention est que, sans faire de compromis sur la qualité du bombage, notamment par pressage et/ou de la trempe, on utilise un unique moule annulaire dont le revêtement "mixte" en quelque sorte est parfaitement adapté aux opérations qu'il doit subir en soutenant la feuille de verre.

Ces exemples ne sont donc donnés qu'à titre d'illustration, et donnent les résultats souhaités, c'est-à-dire qu'aucun marquage n'est observé sur les feuilles de verre bombées/trempées avec des moules ainsi revêtus, et que le niveau de trempe de la périphérie des feuilles est satisfaisant.

## Revendications

1. Dispositif de bombage/trempe de feuilles de verre portées à leur température de ramollissement en vue de leur bombage et de leur trempe, comportant des moyens de bombage supérieurs, notamment un élément supérieur plein, et un moule annulaire inférieur muni d'un revêtement et sur lequel les feuilles bombées sont trempées thermiquement à l'air, **caractérisé en ce que** la surface de contact du revêtement dudit moule annulaire avec les feuilles de verre au début de leur déformation sur le moule se situant sur le pourtour extérieur dudit moule est adaptée au déplacement sans marque du verre sur ledit moule, notamment est adaptée au pressage, **et en ce que** la surface de contact du revêtement du moule annulaire avec les feuilles de verre à la fin du déplacement, notamment à la fin du pressage, se situant sur le pourtour intérieur dudit moule est adaptée à la trempe.

2. Dispositif selon la revendication 1, **caractérisé en ce que** ledit moule annulaire comporte un rail continu ou un rail segmenté présentant au moins une partie articulée par rapport au reste du rail.

3. Dispositif selon une des revendications 1 ou 2, **caractérisé en ce que** les surfaces de contact, l'une adaptée au déplacement relatif verre/moule, notamment adaptée au pressage, l'autre à la trempe du revêtement du moule annulaire sont obtenues par au moins deux types de revêtements, soit étant juxtaposés, soit l'un des deux recouvrant partiellement l'autre, de manière à ce que la surface globale de contact avec les feuilles de verre du moule annulaire présente une continuité de niveau.

4. Dispositif selon l'une des revendications 1 ou 2, **caractérisé en ce que** les surfaces de contact, l'une adaptée au déplacement relatif verre/moule, notamment adaptée au pressage, l'autre à la trempe du revêtement du moule annulaire sont obtenues par un seul revêtement, notamment par un tricot dont le maillage est serré au niveau de la surface de contact adaptée au déplacement relatif verre/moule et dont le maillage est aéré au niveau de la surface de contact adaptée à la trempe thermique.

5. Dispositif selon la revendication 3, **caractérisé en ce que** dans le cas d'une juxtaposition des deux types de revêtements, celle-ci est obtenue par couture de l'un à l'autre.

6. Dispositif selon l'une des revendications 1 à 5, **caractérisé en ce que** la largeur de la surface de contact adaptée à la trempe est approximativement la même que celle de la feuille de verre supportée par le moule annulaire lors de l'opération de trempe.

7. Dispositif selon l'une des revendications 1 à 6, **caractérisé en ce que** l'ensemble du revêtement du moule annulaire est tendu sur ledit moule par des moyens mécaniques.

8. Dispositif selon l'une des revendications 3 à 7, **caractérisé en ce que** chacun des revêtements est à base de fibres réfractaires métalliques, de préférence en acier inoxydable ou en alliage nickel-chrome.

9. Dispositif selon une des revendications 1 à 3 et 5 à 8, **caractérisé en ce que** la surface de contact adaptée au déplacement relatif verre/moule, notamment adaptée au pressage, est obtenue par un revêtement lisse, notamment sous forme de tricot à malles serrées ou de tissu associé à du feutre.

10. Dispositif selon une des revendications 1 à 3 et 5 à 9, **caractérisé en ce que** la surface de contact adaptée à la trempe, est obtenue par un revêtement très perméable à l'air, notamment sous forme de tricot ou de filet, tous deux à mailles larges.

11. Dispositif selon l'une des revendications 1 à 10, **caractérisé en ce que** le moule annulaire comporte en outre au moins un déflecteur prolongeant localement celui-ci vers l'extérieur en suivant sa courbure, la surface de contact de ce déflecteur avec les feuilles de verre étant adaptée au déplacement relatif verre/moule, notamment au pressage, et obtenue notamment par un revêtement lisse identique à celui de la surface de contact adaptée au déplacement relatif verre/moule.

12. Matériau destiné au revêtement de moules servant de support aux feuilles de verre pendant leur bombage et leur trempe, **caractérisé en ce qu**'il présente au moins deux zones de structures distinctes, juxtaposées ou se recouvrant partiellement, de manière à ce que la surface globale de contact avec les feuilles de verre présente une continuité de niveau avec des zones à structure dense ayant un aspect lisse pour un contact sans aspérités et des zones à structure aérée.

13. Matériau selon la revendication 12, **caractérisé en ce qu**'il est obtenu par tricotage et/ou tissage.

14. Matériau selon la revendication 13, **caractérisé en ce qu**'il est à base de fibres réfractaires métalliques, de préférence en acier inoxydable ou en alliage nickel-chrome.

15. Matériau selon la revendication 13 ou 14, **caractérisé en ce qu**'il comporte des fils ou fibres non métalliques, notamment en matériau céramique tel que la silice.

16. Matériau selon l'une des revendications 13 à 15, **caractérisé en ce qu**'il est obtenu par une modification de la structure de tricotage ou de tissage.

17. Matériau selon l'une des revendications 12 à 16, **caractérisé en ce que** les zones à structure dense ont une perméabilité à l'air comprise entre environ 1500 et 15000 et de préférence entre environ 4000 et 10000 et les zones à structure aérée une perméabilité supérieure à environ 15000.

18. Revêtement pour moule annulaire servant au support de feuilles de verre lors de leur bombage et de leur trempe, **caractérisé en ce qu**'il présente au contact des feuilles de verre deux surfaces juxtaposées, l'une destinée à être située sur le pourtour extérieur dudit moule et autorisant le glissement sans marque des bords des feuilles de verre sur elle, suite à la déformation des feuilles de verre, notamment par pressage, l'autre destinée à être située sur le pourtour intérieur dudit moule et autorisant la trempe thermique à l'air des feuilles de verre bombées posées sur le moule avec intercalation dudit revêtement.

19. Revêtement pour moule annulaire selon la revendication 18, **caractérisé en ce que** celle de ses deux surfaces qui autorise le glissement relatif du verre sur elle sans marque, notamment par pressage, est collée sur le moule.

20. Revêtement pour moule annulaire selon la revendication 18 ou 19, **caractérisé en ce qu**'il est obtenu par tricotage et/ou tissage.

21. Revêtement pour moule annulaire selon la revendication 20, **caractérisé en ce que** les surfaces juxtaposées sont obtenues par une modification de la structure de tricotage ou de tissage.

22. Revêtement pour moule annulaire selon l'une des revendications 18 à 21, **caractérisé en ce qu**'il est base de fibres réfractaires métalliques, de préférence en acier inoxydable ou en alliage nickel-chrome.

23. Revêtement pour moule annulaire selon l'une des revendications 18 à 22, **caractérisé en ce qu**'il comporte des fils ou fibres non métalliques, notamment en matériau céramique tel que la silice.

24. Revêtement pour moule annulaire selon l'une des revendications 18 à 23, **caractérisé en ce que** la surface autorisant le glissement sans marque est obtenue par une zone à structure dense de perméabilité à l'air comprise entre environ 1500 et 15000, de préférence entre environ 4000 et 10000, **et en ce que** la surface autorisant la trempe thermique à l'air est obtenue par une zone à structure aérée de perméabilité à l'air supérieure à environ 15000.

## Claims

1. Apparatus for bending/tempering glass sheets raised to their softening point with a view to their bending and tempering, comprising upper bending means, particularly a solid, upper member, and a lower annular mould provided with a covering and on which the bent sheets are thermally tempered in air, characterized in that the contact surface of the covering of said annular mould with the glass sheets at the start of the deformation thereof on the mould located on the outer periphery of said mould is adapted to the mark-free displacement on said mould, particularly being suitable for pressing and in that the contact surface of the covering of the annular mould with the glass sheets at the end of displacement, particularly at the end of pressing, is located on the inner periphery of said mould and is suitable for tempering.

2. Apparatus according to claim 1, characterized in that the annular mould has a continuous rail or a segmented rail having at least one part articulated with respect to the remainder of the rail.

3. Apparatus according to one of the claims 1 or 2, characterized in that the contact surfaces, one suitable for the relative displacement between the glass and the mould, particularly suitable for pressing, and the other for tempering the covering of the annular mould are obtained by at least two types of covering, which are either juxtaposed, or one of them totally or partly covers the other, so that the overall contact surface with the glass sheets of the annular mould has a level continuity.

4. Apparatus according to one of the claims 1 or 2, characterized in that the contact surfaces, one suitable for the relative displacement between the glass and the mould, particularly suitable for pressing, and the other for tempering the covering of the annular mould are obtained by a single covering, particularly a knitted fabric, whose mesh structure is dense at the contact surface suitable for the relative displacement between glass and mould and whose mesh structure is ventilated at the contact surface suitable for the tempering.

5. Apparatus according to claim 3, characterized in that in the case of a juxtaposing of the two covering types, this is brought about by sewing one to the other.

6. Apparatus according to any one of the claims 1 to 5, characterized in that the width of the contact surface suitable for tempering is approximately the same as that of the glass sheet supported by the annular mould during the tempering operation.

7. Apparatus according to any one of the claims 1 to 6, characterized in that the complete covering of the annular mould is held taut on said mould by mechanical means.

8. Apparatus according to any one of the claims 3 to 7, characterized in that each of the coverings is based on refractory metallic fibres, preferably of stainless steel or nickel/chrome alloy.

9. Apparatus according to any one of the claims 1 to 3 and 5 to 8, characterized in that the contact surface suitable for the relative displacement between the glass and the mould and in particular suitable for pressing, is obtained by a smooth covering, particularly in the form of a knitted fabric having dense meshes or a fabric associated with felt.

10. Apparatus according to any one of the claims 1 to 3 and 5 to 9, characterized in that the contact surface suitable for tempering is obtained by a very air-permeable covering, particularly in the form of a knitted fabric or gauze, both having wide meshes.

11. Apparatus according to any one of the claims 1 to 10, characterized in that the annular mould also has at least one deflector locally extending the same towards the outside following its curvature, the contact surface of said deflector with the glass sheets being suitable for the relative displacement between the glass and the mould, particularly during pressing, and in particular obtained by a smooth covering identical to that of the contact surface suitable for the relative displacement between the glass and the mould.

12. Material intended for the covering of moulds serving as a support for glass sheets during their bending and their tempering, characterized in that it has at least two zones of separate structures, which are juxtaposed or partly overlap, so that the total contact surface with the glass sheets has a level continuity with zones having a dense structure and a smooth appearance for a roughness-free contact and zones having a ventilated structure.

13. Material according to claim 12, characterized in that it is obtained by knitting and/or weaving.

14. Material according to claim 13, characterized in that it is based on metallic refractory fibres, preferably of stainless steel or a nickel-chromium alloy.

15. Material according to claim 13 or 14, characterized in that it has non-metallic threads or fibres, particularly made from a ceramic material such as silica.

16. Material according to one of the claims 13 to 15, characterized in that it is obtained by modifying the knitting or weaving structure.

17. Material according to one of the claims 12 to 16, characterized in that the zones having a dense structure have a permeability to air between approximately 1500 and 15,000 and preferably between approximately 4,000 and 10,000 and the zones having a ventilated structure have a permeability exceeding approximately 15,000.

18. Covering for an annular mould serving as a support for glass sheets during their bending and their tempering, characterized in that it has in contact with the glass sheets two juxtaposed surfaces, one intended to be placed on the outer periphery of said mould and allowing the mark-free sliding of the edges of the glass sheets thereon, following a deformation of the glass sheets, more particularly by pressing, whilst the other is intended to be located on the inner periphery of said mould and allows thermal tempering in air of the bent glass sheets placed on the mould with the interposing of said covering.

19. Covering according to claim 18, characterized in that whichever of the two surfaces allows the mark-free relative sliding thereon of the glass, particularly by pressing, is bonded to the mould.

20. Covering for an annular mould according to claim 18 or 19, characterized in that it is obtained by knitting and/or weaving.

21. Covering for an annular mould according to claim 20, characterized in that the juxtaposed surfaces are obtained by a modification of the knitting or weaving structure.

22. Covering for an annular mould according to any one of the claims 18 to 21, characterized in that it is based on refractory metallic fibres, preferably of stainless steel or nickel-chrome alloy.

23. Covering for an annular mould according to one of the claims 18 to 22, characterized in that it incorporates non-metallic filaments or fibres, particularly of a ceramic material such as silica.

24. Covering for an annular mould according to one of the claims 18 to 23, characterized in that the surface allowing the mark-free sliding is obtained by an area having a dense structure and permeability to air between approximately 1500 and 15000, preferably between approximately 4000 and 10000 and in that the surface allowing the thermal tempering in air is obtained by an area having a ventilated structure with a permeability to air exceeding approximately 15000.

## Patentansprüche

1. Biege-Vorspann-Vorrichtung für auf Erweichungstemperatur gebrachte Glasscheiben, um sie zu biegen und vorzuspannen, umfassend obere Biegemittel, insbesondere ein oberes volles Element, und eine mit einem Überzug versehene untere Ringform, auf welcher die gebogenen Glasscheiben mittels Luft thermisch vorgespannt werden, **dadurch gekennzeichnet, daß** die Kontaktfläche des Überzugs der Ringform mit den Glasscheiben zu Beginn deren Verformung auf dieser Form, die sich auf dem Außenumfang der Form befinden, für eine Bewegung ohne Spuren des Glases auf der Form und insbesondere auf den Preßvorgang angepaßt ist **und daß** die Kontaktfläche des Überzugs der Ringform mit den Glasscheiben am Ende der Bewegung und insbesondere am Ende des Preßvorgangs, die sich auf dem Innenumfang dieser Form befinden auf den Vorspannvorgang angepaßt ist.

2. Vorrichtung nach Anspruch 1, **dadurch gekennzeichnet, daß** die Ringform eine ununterbrochene Schiene oder eine Segmentschiene enthält, die wenigstens einen Teil aufweist, der in bezug auf die übrige Schiene gelenkig ist.

3. Vorrichtung nach Anspruch 1 oder 2, **dadurch gekennzeichnet, daß** die Kontaktflächen des Überzugs der Ringform, von denen eine für die Relativbewegung Glas-Form, insbesondere einen Preßvorgang, und die andere für den Vorspannvorgang geeignet ist, durch wenigstens zwei Überzugsarten, die entweder nebeneinander angeordnet sind oder von denen eine die andere teilweise bedeckt, derart erhalten werden, daß die gesamte Kontaktfläche der Ringform mit den Glasscheiben eine Niveaukontinuität besitzt.

4. Vorrichtung nach Anspruch 1 oder 2, **dadurch gekennzeichnet, daß** die Kontaktflächen des Überzugs der Ringform, von denen eine für die Relativbewegung Glas-Form, insbesondere einen Preßvorgang, und die andere für den Vorspannvorgang geeignet ist, durch einen einzigen Überzug, insbesondere ein Gestrick, erhalten werden, dessen Netzwerk in Höhe der für die Relativbewegung Glas-Form geeigneten Kontaktfläche gespannt und in Höhe der für das thermische Vorspannen geeigneten Kontaktfläche belüftet ist.

5. Vorrichtung nach Anspruch 3, **dadurch gekennzeichnet, daß** im Fall einer Nebeneinanderanordnung der zwei Arten von Überzügen sie durch Vernähen der einen mit der anderen hergestellt wird.

6. Vorrichtung nach einem der Ansprüche 1 bis 5, **dadurch gekennzeichnet, daß** die Breite der für den Vorspannvorgang geeigneten Kontaktfläche etwa dieselbe wie die der Glasscheibe ist, welche während des Vorspannvorgangs von der Ringform getragen wird.

7. Vorrichtung nach einem der Ansprüche 1 bis 6, **dadurch gekennzeichnet, daß** der Überzugsaufbau der Ringform durch mechanische Mittel auf dieser gespannt wird.

8. Vorrichtung nach einem der Ansprüche 3 bis 7, **dadurch gekennzeichnet, daß** jeder der Überzüge hitzebeständige Metallfasern, vorzugsweise aus rostfreiem Stahl oder einer Chromnickellegierung, als Grundlage hat.

9. Vorrichtung nach einem der Ansprüche 1 bis 3 und 5 bis 8, **dadurch gekennzeichnet, daß** die für die Relativbewegung Glas-Form, insbesondere einen Preßvorgang, geeignete Kontaktfläche durch einen glatten Überzug, insbesondere in Form eines Gestricks mit gespannten Maschen oder eines mit Filz verbundenen Gewebes, erhalten wird.

10. Vorrichtung nach einem der Ansprüche 1 bis 3 und 5 bis 9, **dadurch gekennzeichnet, daß** die für den Vorspannvorgang geeignete Kontaktfläche durch einen sehr luftdurchlässigen Überzug, insbesondere in Form eines Gestricks oder Netzes, beide mit weiten Maschen, erhalten wird.

11. Vorrichtung nach einem der Ansprüche 1 bis 10, **dadurch gekennzeichnet, daß** die Ringform außerdem wenigstens eine Leiteinrichtung enthält, die sie örtlich nach außen ihrer Krümmung folgend verlängert, wobei die Kontaktfläche dieser Leiteinrichtung mit den Glasscheiben für die Relativbewegung Glas-Form, speziell einen Preßvorgang, geeignet ist und insbesondere durch einen glatten Überzug erhalten wird, der mit dem der für die Relativbewegung Glas-Form geeigneten Kontaktfläche identisch ist.

12. Material, das zum Überziehen von Formen vorgesehen ist, die während des Biegens und Vorspannens als Träger für Glasscheiben dienen, **dadurch gekennzeichnet, daß** es wenigstens zwei Bereiche mit unterschiedlicher Struktur besitzt, die derart nebeneinander angeordnet sind oder sich teilweise bedecken, daß die gesamte für die Glasscheiben vorgesehene Kontaktfläche mit den Bereichen mit dichter Struktur, die für einen von Unebenheiten freien Kontakt glatt sind, und mit den Bereichen mit belüfteter Struktur eine ununterbrochene Höhe aufweist.

13. Material nach Anspruch 12, **dadurch gekennzeichnet, daß** es durch Stricken und/oder Weben hergestellt ist.

14. Material nach Anspruch 13, **dadurch gekennzeichnet, daß** es hitzebeständige Metallfasern, vorzugsweise aus rostfreiem Stahl oder einer Chromnickellegierung, als Grundlage hat.

15. Material nach Anspruch 13 oder 14, **dadurch gekennzeichnet, daß** es nichtmetallische Fäden oder Fasern, insbesondere aus Keramikmaterial wie Siliciumdioxid, enthält.

16. Material nach einem der Ansprüche 13 bis 15, **dadurch gekennzeichnet, daß** es durch eine Abänderung der Gestrick- oder Gewebestruktur hergestellt ist.

17. Material nach einem der Ansprüche 12 bis 16, **dadurch gekennzeichnet, daß** die Bereiche mit dichter Struktur eine Luftdurchlässigkeit von etwa 1500 bis 15000 und vorzugsweise etwa 4000 bis 10000 und die Bereiche mit belüfteter Struktur eine Luftdurchlässigkeit von über etwa 15000 besitzen.

18. Überzug für eine Ringform, die während des Biegens und Vorspannens als Träger für Glasscheiben dient, **dadurch gekennzeichnet, daß** er für den Kontakt mit den Glasscheiben zwei nebeneinander angeordnete Flächen aufweist, von denen eine auf dem Außenumfang der Form angeordnet ist und es ermöglicht, daß die Glasscheibenränder auf ihr gleiten ohne Spuren zu bekommen, die von der Verformung der Glasscheiben, insbesondere durch einen Preßvorgang, verursacht werden, und die andere auf dem Innenumfang der Form angeordnet ist und das thermische Vorspannen der gebogenen Glasscheiben durch Luft ermöglicht, die auf der Form über dem dazwischen befindlichen Überzug aufliegen.

19. Überzug nach Anspruch 18, **dadurch gekennzeichnet, daß** diejenige seiner beiden Flächen, welche das relative Gleiten, insbesondere durch einen Preßvorgang, des Glases auf ihr ohne Spuren zu hinterlassen ermöglicht, auf die Form geklebt ist.

20. Überzug für eine Ringform nach Anspruch 18 oder 19, **dadurch gekennzeichnet, daß** er durch Abänderung der Struktur des Gestricks und/oder Gewebes hergestellt ist.

21. Überzug für eine Ringform nach Anspruch 20, **dadurch gekennzeichnet, daß** die nebeneinander angeordneten Flächen durch eine Modifikation der Struktur des Gestricks oder des Gewebes hergestellt sind.

22. Überzug für eine Ringform nach einem der Ansprüche 18 bis 21, **dadurch gekennzeichnet, daß** er auf hitzebeständigen Metallfasern, vorzugsweise aus rostfreiem Stahl oder einer Chromnickellegierung basiert.

23. Überzug für eine Ringform nach einem der Ansprüche 18 bis 22, **dadurch gekennzeichnet, daß** er nichtmetallische Fäden oder Fasern, insbesondere aus Keramikmaterial wie Siliziumdioxid enthält.

24. Überzug für eine Ringform nach einem der Ansprüche 18 bis 23, **dadurch gekennzeichnet, daß** die Fläche ein Gleiten ohne Spuren zuläßt und durch eine Zone mit einer dichten Luftdurchlässigkeitsstruktur zwischen etwa 1.500 bis 15.000, vorzugsweise etwa 4.000 bis 10.000 erzielt wird und **dadurch, daß** die Fläche, welche eine thermische Vorspannung durch Luft ermöglicht, durch eine Zone mit einer belüfteten Struktur mit einer Luftdurchlässigkeit von mehr als etwa 15.000 erzielt wird.
